(19)

Europäisches Patentamt

European Patent Office

Office européen des brevets

(11) **EP 4 729 934 A1**

(12) **EUROPEAN PATENT APPLICATION**
published in accordance with Art. 153(4) EPC

(43) Date of publication:
22.04.2026 Bulletin 2026/17

(21) Application number: 24823341.3

(22) Date of filing: 10.06.2024

(51) International Patent Classification (IPC):
$G01N\ 27/28^{(2006.01)}$    $G01N\ 27/30^{(2006.01)}$
$G01N\ 27/333^{(2006.01)}$    $G01N\ 27/416^{(2006.01)}$

(52) Cooperative Patent Classification (CPC):
G01N 27/28; G01N 27/30; G01N 27/333;
G01N 27/416

(86) International application number:
PCT/JP2024/021045

(87) International publication number:
WO 2024/257725 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.06.2023 JP 2023097172
17.04.2024 JP 2024067014

(71) Applicant: Canon Kabushiki Kaisha
Tokyo, 146-8501 (JP)

(72) Inventors:
• MAEDA Harunobu
Tokyo 146-8501 (JP)

• YAMAMOTO Takeshi
Tokyo 146-8501 (JP)
• MIYAZAKI Keiji
Tokyo 146-8501 (JP)
• FUKATSU Makoto
Tokyo 146-8501 (JP)
• MIURA Jun
Tokyo 146-8501 (JP)
• TANAKA Masanori
Tokyo 146-8501 (JP)
• ENOKIDO Fuka
Tokyo 146-8501 (JP)

(74) Representative: TBK
Bavariaring 4-6
80336 München (DE)

(54) **ANALYSIS DEVICE**

(57) The purpose is to provide an analytical device that is simple and can perform analysis with stable measurement potential.

An analytical device having a channel region enclosed by a channel wall provided in an inside of a porous substrate, wherein the channel region comprises a first channel chamber, a second channel chamber, and a channel connecting the first channel chamber and the second channel chamber, wherein a reference electrode is provided in the first channel chamber, and a working electrode is provided in the second channel chamber, wherein an electrolyte is arranged upstream of the first channel chamber or on the surface of the reference electrode based on the advancing direction of a specimen in the channel region, and a component A is arranged upstream of a position where the electrolyte is arranged, wherein the component A is a component exerting an effect to change the conformation of a protein in the specimen.

FIG. 1A

**Description**

[Technical Field]

The present invention relates to an analytical device in which a channel region is provided in an inside of a porous substrate, an electrolyte concentration measurement system using the analytical device, and an electrolyte concentration measurement method.

[Background Art]

In recent years, devices that perform chemical analysis efficiently (small amount, quick and simple) in a single chip using fine flow channels have attracted attention in a wide range of fields such as biochemistry research, medicine, drug discovery, healthcare, environment, and food.

Among analytical devices, paper-based devices, called "μPADs" (microfluidic paper-based analytical devices), are capable of chemical analysis by permeating specimens and test solutions using the capillary action of paper. Advantages of this device include small size, low cost, easy to carry, high disposability (just burn it to complete disposal), and no need for large equipment. It is said that the practical application of this new analytical device will make it possible for anyone to perform laboratory diagnosis by POC (point of care) easily and at low cost.

In addition, due to the advantages of μPADs described above, they are expected to be used in developing countries and depopulated areas where medical facilities are not sufficiently developed, disaster sites where prompt emergency activities are necessary, and airports where the spread of infectious diseases must be stopped at the water's edge. It is also attracting attention as a healthcare device for managing and monitoring daily health conditions and as a variety of pathological diagnosis devices in ordinary medical practice, and has a wide range of applications.

One of the biochemical tests in the above pathological diagnosis is the electrolyte test. Electrolytes (Na ion, K ion, Cl ion, etc.) are essential for life support, such as maintaining a constant water content and pH level in the body, nerve transmission, and functioning muscles normally. Electrolyte test measures the concentration of electrolyte ions in blood and urine to check the balance of ion concentration in the body.

IIn general, changes in electrolyte levels in the body are likely to indicate abnormalities in kidney function or hormone function. Electrolyte test is therefore an essential test for disease screening. In addition, it is a very important test to confirm the physiological function (life support) of a patient at a disaster site. Various universities and companies have been conducting research aiming at performing this electrolyte measurement with μPADs.

In Non-Patent Literature 1, there is a proposal of an analytical device for measuring the concentration of Na ion and K ion. The analytical device has a dispensing section for dispensing a specimen, and the dispensed specimen permeates from the dispensing section into each region of a working electrode and a reference electrode, and electrically connects both electrodes to measure a potential difference. In this analytical device, KCl ion crystals are deposited on the reference electrode in order to obtain a stable potential at the reference electrode, and since KCl is dissolved in the specimen at the time of measurement, Cl ions in the reference electrode region can be held at a high concentration, and a stable potential of the reference electrode can be obtained. Although not μPADs (the substrate used is not a porous substrate), Patent Literature 1 discloses a multi-ion sensor plate for obtaining a stable potential by bringing the specimen liquid supplied to the working electrode portion and the reference solution supplied to the reference electrode portion into contact at the liquid entanglement portion.

[Citation List]

[Patent Literature]

PTL 1: Japanese Patent Laid-Open No. H11-194109

[Non-Patent Literature]

NPL 1: Nipapan Ruecha, Orawon Chailapakul, Koji Suzuki and Daniel Citterio, "Fully Inkjet-Printed Paper-Based Potentiometric Ion-Sensing Devices", Analytical chemistry, August 29, 2017 Published, 89, pp.10608-10616

[Summary of Invention]

[Technical Problem]

However, in the configuration as described in Non-Patent Literatue 1, in the measurement of a specimen containing a protein in a component such as serum or plasma, when the specimen permeates through an electrolyte layer (KCl layer), the hydrated water of the hydrated protein is easily taken up by the electrolyte, and the salting out and aggregation of the protein are easy to occur. As a result, the salting out and aggregated proteins inhibited the permeation of the specimen in the channel, and the measurement potential became unstable, and the measurement time became long.

In Patent Literature 1, two configurations are disclosed, a configuration in which a surfactant is contained in a specimen for maintaining the dispersibility of a hydrophobic substance (hematocrit or similar substance) contained in the specimen liquid and preventing its sedimentation (precipitation), and a configuration in which a surfactant coating membrane is provided in a channel leading to the specimen liquid side electrode. However, according to the configuration of Patent Literature 1, in order to include the surfactant in the specimen liquid in a sufficiently mixed state in advance, a specimen volume of about several mL is required for stirring the mixed liquid, which may increase the burden on the patient. In addition, when a coating membrane of the surfactant is provided in the channel, the coating membrane on the wall of the channel is limited, and it cannot uniformly contact the specimen flowing in the channel, and the mixing with the specimen liquid may be insufficient.

It is an object of the present invention to provide an analytical device in which a layer for suppressing salting out and aggregation of proteins is provided at an appropriate position, an appropriate potential of a reference electrode is indicated, and a simple and stable analysis can be performed.

[Solution to Problem]

The present invention relates to an analytical device having a channel region enclosed by a channel wall provided in an inside of a porous substrate,

wherein the channel region comprises a first channel chamber, a second channel chamber,
and a channel connecting the first channel chamber and the second channel chamber,
wherein a reference electrode is provided in the first channel chamber, and
a working electrode is provided in the second channel chamber,
wherein an electrolyte is arranged upstream of the first channel chamber or on the surface of the reference electrode based on the advancing direction of a specimen in the channel region, and
a component A is arranged upstream of a position where the electrolyte is arranged,
wherein the component A is a component exerting an effect to change a conformation of a protein in a specimen.

[Advantageous Effects of Invention]

According to the present invention, it is possible to provide an analytical device capable of performing analysis with a simple and stable measurement potential. Since the component A can be effectively mixed with a specimen by providing the component A in the porous channel, salting out of the electrolyte provided near the reference electrode can be suppressed, and the effect that can be examined with a small amount of a specimen is obtained.

[Brief Description of Drawings]

[Fig. 1A]

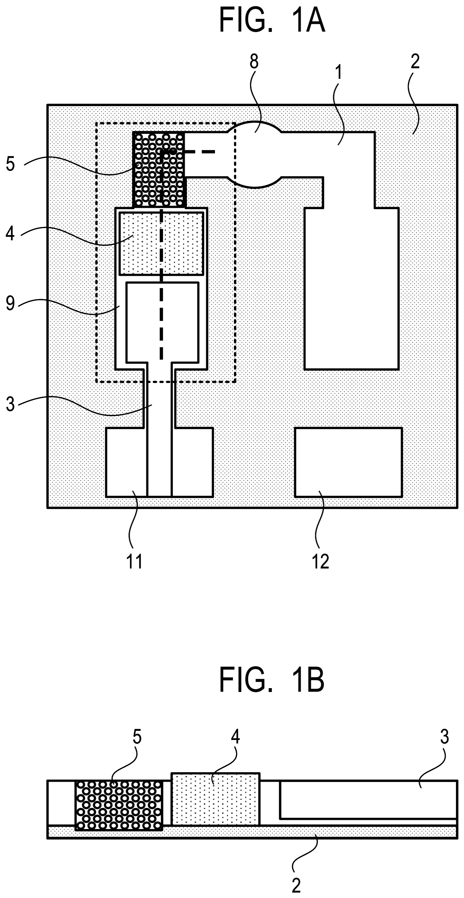

Fig. 1A is a block diagram of a reference electrode.
[Fig. 1B]
Fig. 1B is a cross-sectional view of the reference electrode in the broken line portion of Fig. 1A.
[Fig. 2A]

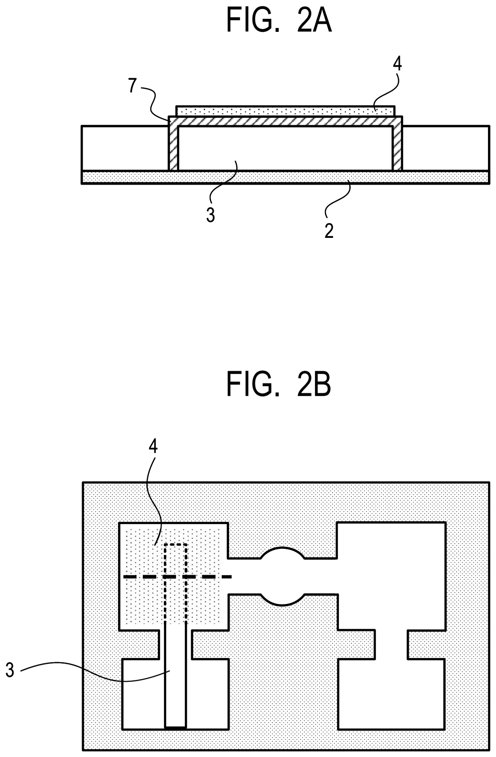

Fig. 2A is a cross-sectional view of the broken line portion of Fig. 2B in the configuration of a conventional example.
[Fig. 2B]
Fig. 2B is a block diagram of a conventional example.
[Fig. 3]

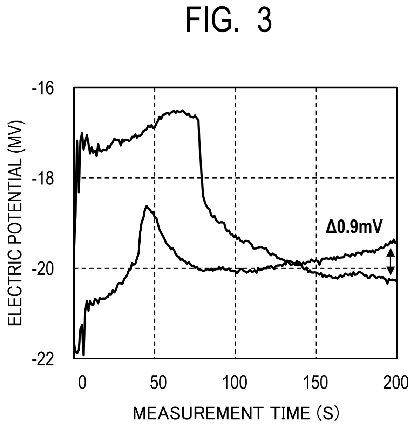

Fig. 3 shows changes with time in the electric potential when a serum specimen is measured in the configuration of a conventional example.
[Fig. 4]

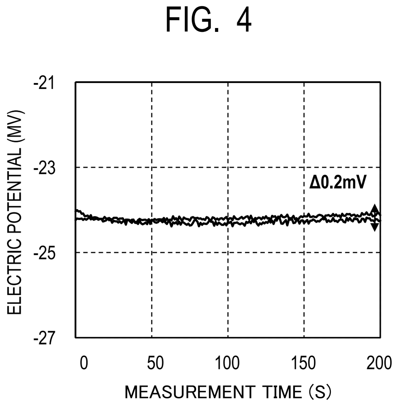

Fig. 4 shows changes with time in the electric potential when an ultrafiltrated serum specimen is measured in the configuration of a conventional example.
[Fig. 5]

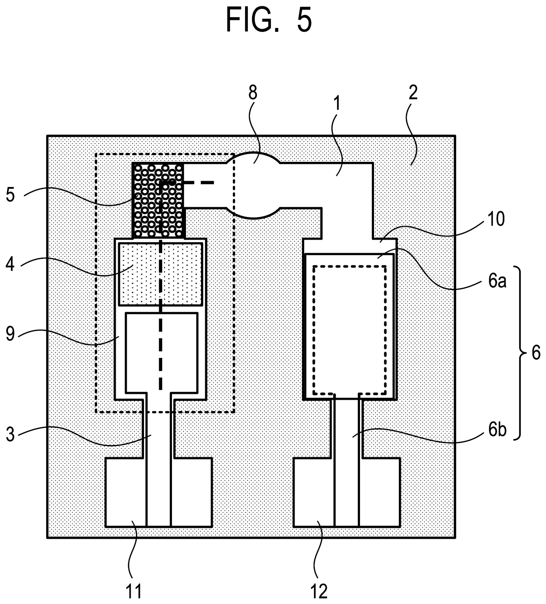

Fig. 5 is a block diagram of the analytical device of the first embodiment.

[Fig. 6]

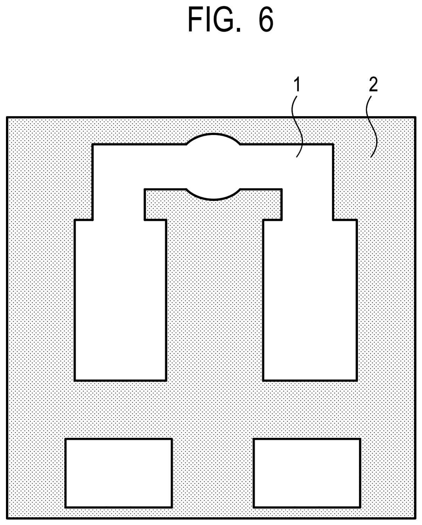

Fig. 6 is a block diagram of a channel pattern.
[Fig. 7]

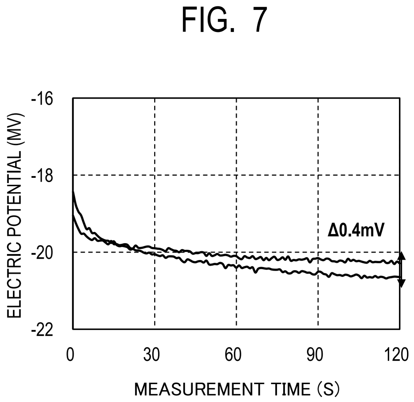

Fig. 7 shows changes with time in the electric potential when a serum specimen is measured in the configuration of only the reference electrode of Example 1.
[Fig. 8]

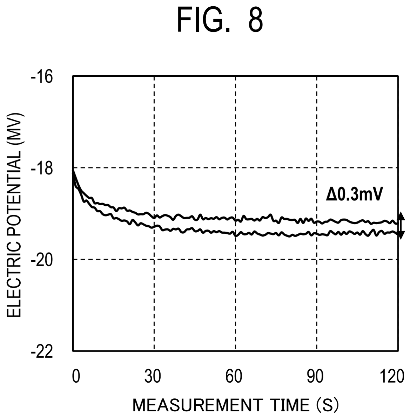

Fig. 8 shows changes with time in the electric potential when a serum specimen is measured in the configuration of only the reference electrode of Example 1.
[Fig. 9]

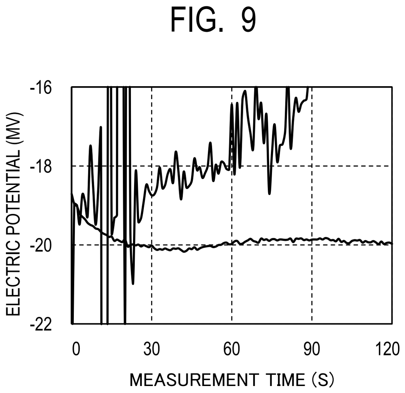

Fig. 9 shows changes with time in the electric potential when a serum specimen is measured in the configuration of only the reference electrode of Example 1.
[Fig. 10]

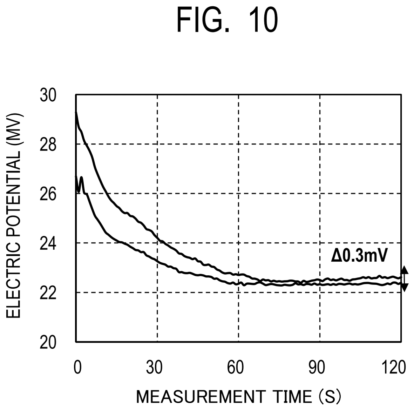

Fig. 10 shows changes with time in the electric potential when a serum specimen is measured in the configuration in which the reference electrode and the working electrode of Example 1 are combined.
[Fig. 11]

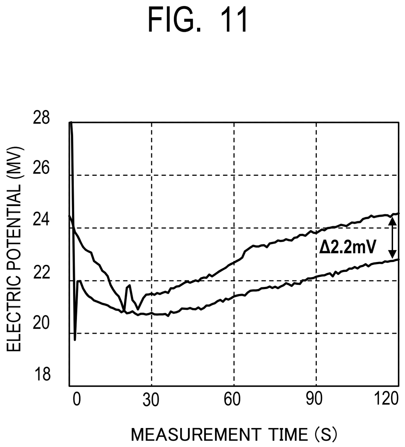

Fig. 11 shows changes with time in the electric potential when a serum specimen is measured in the configuration of the comparative example according to Example 1.
[Fig. 12]

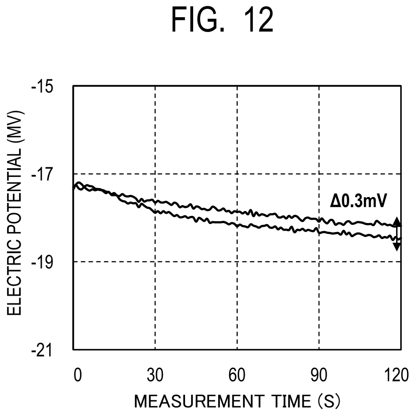

Fig. 12 shows changes with time in the electric potential when a serum specimen is measured in the configuration of only the reference electrode of Example 2.
[Fig. 13]

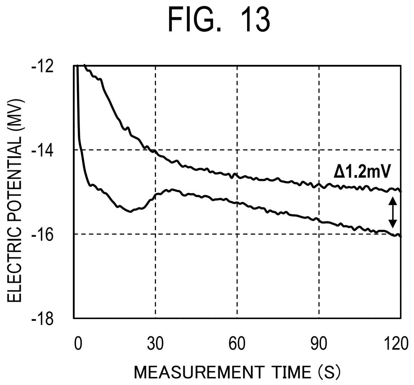

Fig. 13 shows changes with time in the electric potential when a serum specimen is measured in the configuration of only the reference electrode of Example 2.

[Description of Embodiments]

The operation of the present invention will be described in detail.

The role of the reference electrode in the electrolyte concentration measurement of the present invention is to serve as a reference potential with respect to the potential generated by the working electrode. Therefore, if the potential of the reference electrode is not stable, the potential difference between the reference electrode and the working electrode becomes inaccurate.

Generally, Ag/AgCl electrodes are often used as base electrodes of reference electrodes. In the Ag/AgCl electrode, the following equilibrium reaction occurs at the interface with the specimen, and the potential is determined by the concentration of $Cl^-$.

[Chem. 1]

$$Ag + Cl^- \rightleftharpoons AgCl + e^-$$

Therefore, the potential can be stabilized by keeping the $Cl^-$ concentration constant.

Therefore, since the $Cl^-$ concentration is constant in a saturated sodium chloride (NaCl) solution or potassium chloride (KCl) solution, the same interfacial potential is always obtained when the Ag/AgCl electrode is reacted with the saturated NaCl or KCl solution.

If the specimen is a NaCl solution, after reaching a saturation concentration of 5.2 mol/L to 5.4 mol/L, the specimen will not dissolve further, so that the $Cl^-$ concentration will remain constant and the equilibrium state will be reached, and the potential will not change further.

Based on this principle, saturated KCl or NaCl is used as the internal liquid of an internal liquid type reference electrode. On the other hand, in a solid electrode type reference electrode, this saturated solution is directly dispensed to the Ag/AgCl electrode as a reference solution to ensure a stable potential.

As an example with a solid electrode type reference electrode, in Non-Patent Literature 1, as shown in Figs. 2A and 2B, an electrolyte layer 4 (KCl layer) is laminated on a support electrolyte membrane 7 (provided to make the contact potential at the interface between the specimen and the Ag/AgCl electrode more stable) provided on a reference electrode 3 (Ag/AgCl electrode). In this configuration, the specimen itself dissolves the electrolyte layer 4 during permeation to keep the $Cl^-$ concentration constant. Since the specimen with a constant $Cl^-$ concentration is supplied to the support electrolyte membrane 7 or the Ag/AgCl electrode, the measurement can be performed without using a reference solution.

In Patent Literature 1, a similar configuration with a solid electrode type reference electrode is proposed, and a method of dispensing a reference solution separately from a specimen is adopted to perform measurement. By this method, a stable measurement potential can be obtained, but convenience and cost of measurement tend to be problems as a reference solution is used. In addition, Patent Literature 1 discloses two configurations to prevent protein aggregation as described later: a configuration in which a surfactant is contained in a specimen, and a configuration in which a surfactant coating membrane is provided in a channel leading to the specimen liquid side electrode. However, according to the configuration of Patent Literature 1, in order to include the surfactant in the specimen liquid in a sufficiently mixed state in advance, a specimen amount of about several mL is required for stirring the mixed liquid, which may increase the burden on the patient. When a coating membrane of the surfactant is provided in the channel, the coating membrane on the wall surface of the channel is limited, and the specimen flowing in the channel cannot be uniformly contacted, and the mixture with the specimen liquid may be insufficient.

In the configuration with the electrolyte layer as described in Non-Patent Literature 1, there are problems described below.

The problem is that in the measurement of a specimen containing a protein in a component such as serum or plasma, when the specimen permeates through an electrolyte layer (KCl layer), the hydrated water of the hydrated protein is easily taken away by the electrolyte, and salting out and aggregation of the protein are likely to occur. As a result of the salting out and aggregation of the protein, the permeation of the specimen in the channel was inhibited, the measurement potential became unstable, and the measurement time was prolonged.

The results of measurement of a serum specimen in a configuration with an electrolyte layer on the reference electrode side as in the conventional configuration shown in Fig. 2B will be described. When two devices of the same configuration were prepared and serum was used as a specimen, the measurement results of the potential difference of the reference electrodes in the devices are shown in Fig. 3. In this experiment, in order to focus only on the performance of the reference electrode 3, a commercially available reference electrode (RE-1BP, manufactured by BAS Inc.) was placed instead of the working electrode 6 on the side where the working electrode 6 is originally formed in the analytical device, and the commercially available electrode and the reference electrode 3 were connected by a specimen, and the potential difference between the two electrodes was measured. From the measurement results, it can be seen that the measured potential fluctuates greatly until about 100 seconds (s) after dispensing. Thereafter, although the fluctuation of the measured potential tends to decrease with the passage of time, a stable potential cannot be maintained, and it was confirmed that a difference of about Δ0.9 mV occurs after 200 seconds. In this configuration, the permeation of the specimen in the electrolyte layer was unstable and slow, and something like agglomeration was also observed on the channel.

As a comparison of this measurement, the serum specimen was ultrafiltered through a commercially available filter (Amicon Ultra -0.5 device (NMWL: 30 K), manufactured by Merck) using the same configuration as described above to remove proteins and other molecules, and the results are shown in Fig. 4. In this specimen it was confirmed that the permeation in the electrolyte layer was smooth, and the potential was stable.

From the above experiments, it was confirmed that in order to stabilize the potential of the reference electrode rapidly, it is necessary that the specimen does not agglomerate in the channel.

The analytical device of the present invention is capable of stably contacting a reference electrode in a state where the permeation of the specimen is not slowed and the Cl⁻ concentration of the specimen is saturated even in the measurement of the specimen containing protein in the component such as serum or plasma.

That is, the analytical device of the present invention has a configuration in which a layer for suppressing salting out and aggregation of proteins is arranged upstream of a position in which the electrolyte layer is arranged, based on the advancing direction of the specimen in the channel region.

In addition to the first channel chamber and the second channel chamber, the analytical device according to the present invention may have a plurality of third channel chambers in which working electrodes are arranged, and they may be connected by a channel. The number of channel chambers arranged in the analytical device is not particularly limited.

[Examples]

Exemplary embodiments of the present invention are described below with reference to the drawings. The following embodiments are examples and do not limit the invention to the contents of the embodiments. In each of the following figures, components which are not necessary for the explanation of the embodiments are omitted from the figures.

(Example 1)

Example 1 is described with reference to Figs. 5 to 8.

Fig. 5 shows the analytical device of Example 1. The analytical device has a channel region enclosed by a channel wall 2 provided in the inside of a porous substrate. The channel region has a first channel chamber 9, a second channel chamber 10, and a channel 1 connecting the first channel chamber 9 and the second channel chamber 10, and the channel 1 has a dispensing section 8. The channel region may or may not have a third channel chamber 11 and a fourth channel chamber 12 of the electrodes. A reference electrode 3 is provided in the first channel chamber 9, and an electrolyte layer 4 is arranged on the upstream side of the reference electrode 3 based on the traveling direction of the specimen (that is, the dispensing section is upstream). By arranging the electrolyte layer 4 on the upstream side of the reference electrode 3, the electrolyte concentration in the specimen becomes saturated and reaches the reference electrode 3 stably. On the upstream side of the electrolyte layer 4, a component A layer 5 exerting an effect of changing the conformation of a protein in the specimen is arranged. A working electrode 6 is provided in the second channel chamber 10, and the working electrode 6 is composed of a base electrode 6b of the working electrode and an ion selective membrane 6a provided so as to cover the base electrode 6b.

The channel formation was carried out using the method described in (Japanese Patent Laid-Open No. 2021-37612). Specifically, a desired channel pattern was formed on the filter paper in a non-fixed state in an electrophotographic manner by using channel forming particles (toner) having characteristic melting properties, and then the channel pattern was infiltrated into the paper by an oven or a heater to form the channel pattern.

The channel pattern formed is as shown in Fig. 6, where reference numeral 1 denotes the channel, and reference numeral 2 denotes the channel wall formed by infiltrating the channel forming particles.

Then, the reference electrode 3 and the working electrode 6 are formed on the channel pattern by screen printing, an ink jet device (IJ), a dispenser, or the like. Since the present invention relates to a reference electrode, the configuration thereof will be described mainly on the reference electrode.

As shown in Fig. 1A, an Ag/AgCl electrode as a reference electrode was printed on the channel pattern by screen printing, and further, as shown in Figs. 1A and 1B, an electrolyte (NaCl or KCl) was printed on the channel and at a position upstream of the Ag/AgCl electrode with respect to the traveling direction of the specimen by an IJ or dispenser. By arranging the electrolyte layer (NaCl or KCl) in such a position, the advancing specimen will always pass through the electrolyte layer. At this time, by dissolving the electrolyte, the concentration ($Cl^-$ concentration) of the electrolyte in the specimen becomes saturated, and the specimen reaches the reference electrode (Ag/AgCl electrode) in this state. As a result, the potential of the reference electrode (Ag/AgCl electrode) is stabilized.

Chloride is preferable as the electrolyte, particularly sodium chloride (NaCl) and potassium chloride (KCl) which are easy to handle. Hereinafter, NaCl with a more stable temperature dependence of solubility will be described.

The electrolyte (NaCl) was arranged in a layer on the channel in front of the reference electrode so that the electrolyte (NaCl) was $3.0 \times 10^2$ g/L or more, preferably $3.4 \times 10^2$ g/L or more per 1L of the specimen supplied to the reference electrode 3. This value is obtained by dividing the amount of NaCl required for saturation by the amount of specimen supplied to the reference electrode 3 because the saturation concentration of the electrolyte also depends on the specimen volume. If $3.0 \times 10^2$ g/L or more of NaCl is disposed per 1 L of specimen volume supplied to the reference electrode 3, the concentration of the specimen passing through the NaCl layer becomes 4.6 mol/L or more, which is close to saturation, so that stable measurement can be performed. Preferably, $3.4 \times 10^2$ g/L or more of NaCl is disposed, in which case the concentration of the specimen that has passed through the NaCl layer is 5.2 mol/L or more, which is sufficient to maintain a saturated $Cl^-$ concentration.

The amount of specimen supplied to the dispensing section 8 is appropriate according to the size and performance of each device, and is generally about 10 μL to 50 μL. For example, as an example of a small device, when the size of the reference electrode is 3 mm×3 mm, the size of the working electrode 6 is 3 mm×3 mm, and the thickness of the paper is 200 μm, the volume of the entire channel including the volume of the channel between them is about $3.6 \times 10^{-9}$ m$^3$ (3.6 μL) (1.8 μL each of reference electrode and working electrode). Therefore, about 10 μL of specimen is sufficient to supply the reference and the working electrodes with specimens.

As the size of the device increases, the amount of specimen required increases, but since the specimen is based on human blood or urine, less is better, generally 50 μL or less. The present invention is not dependent on the size of the device, or the amount of specimen required, but for the reasons described above, the description will be made in the range of about 10 μL to 50 μL of specimen.

In the analytical device of Example 1, when a specimen of 10 μL is dispensed into the dispensing section 8 located in the center of the channel region, about half of the specimen is supplied to the reference electrode side and the other half is supplied to the working electrode side, so that the specimen amount supplied to the reference electrode is about 5 μL. Note that in this embodiment, an electrolyte having saturated concentration is arranged upstream of the first channel chamber in Fig. 1A.

For example, when the amount of specimen supplied to the reference electrode is 5 μL, the NaCl concentration of 4.6 mol/L or more can be obtained by arranging 1.5 mg of NaCl. Therefore, when NaCl is arranged in a 3 mm×3 mm region with a thickness of 200 μm, if $8.3 \times 10^5$ g/m$^3$ or more of NaCl is arranged per unit volume of the NaCl arrangement region, the concentration of NaCl in the specimen that has passed through the NaCl layer becomes 4.6 mol/L or more, which is close to saturation. Furthermore, if $9.4 \times 10^5$ g/m$^3$ or more of NaCl per unit volume is arranged in the NaCl arrangement region, the concentration of the specimen that has passed through the NaCl layer becomes 5.2 mol/L, which is sufficient to bring the Ag/AgCl electrode into equilibrium.

When the specimen reaches the arranged electrolyte (NaCl) layer, it moves toward the reference electrode (Ag/AgCl electrode) while dissolving the arranged electrolyte (NaCl). At this time, the Cl- concentration in the specimen passing through the electrolyte (NaCl) layer is always kept saturated or nearly saturated, and since the saturated specimen is continuously supplied to the reference electrode (Ag/AgCl electrode), a stable potential is obtained.

In this configuration, the reference electrode and the electrolyte layer are not in contact with each other, but the electrolyte layer may be in contact with the reference electrode or may be superposed on the reference electrode. Importantly, the specimen reaches the reference electrode after the concentration of the electrolyte in the specimen has reached saturation.

An aqueous solution containing a surfactant (Tween20, chemical formula: $C_{58}H_{114}O_{26}$) was printed as the A component layer 5 on the upstream side of the electrolyte layer 4, preferably at an adjacent position, by IJ or a dispenser. By these methods, the surfactant can be uniformly disposed in a desired channel region on the porous substrate. In addition, the large surface area of the porous structure can be used to increase the contact area of the specimen and surfactant (compared to a non-porous substrate). Estimated from the BET specific surface area of the paper, the surface area can be increased by about 1000 times or more compared to the configuration of Patent Literature 1, which is advantageous for mixing surfactants and specimens. Since the specimen is stirred between fibers while permeating through this channel by capillary action, even a small amount of the specimen on the order of $\mu$L can be sufficiently mixed with the surfactant. Any porous substrate with a porous structure can be used (filter paper, glass filter paper, etc.). It is important to uniformly arrange a predetermined amount of surfactant in the desired channel region. Focusing on the cross-sectional area of the porous channel from the viewpoint of the amount of specimen to be used, for example, when a base material having a porosity of 50% is used, the channel can be filled with half the amount of specimen as compared with the channel of a cavity having the same cross-sectional area (such as the channel of Patent Literature 1). Since the principle of potential generation at the reference electrode depends on the concentration of Cl- as described above, the same effect can be obtained with half the amount of specimen as long as it is in liquid contact with the working electrode. Therefore, even in a small amount of the specimen of the order of $\mu$L, the above arrangement is expected to suppress aggregation when permeating through the electrolyte layer by mixing with surfactant to form a micelle (changing the conformation of a protein), and to obtain stable measurement potentials. There are different types of surfactants, such as cationic, anionic, amphoteric, and nonionic, but for electrolyte measurement chips, nonionic surfactants that are less likely to interfere with the development of potential on the Ag/AgCl electrode or on the ion selective membrane are preferred. Further, although a surfactant is used in the present embodiment, any material that can change the conformation of a protein may be used, and salts (for example, guanidine hydrochloride as a chaotropic salt), acids (e.g. citric acid), organic solvents (e.g. ethanol), and watersoluble polymers (e.g. polyethylene glycol) may be used.

The formation of the surfactant layer also depends on the amount of specimen supplied to the reference electrode as in the formation of the electrolyte layer. When the amount of specimen supplied to the reference electrode was 5 $\mu$L, the following experiments were conducted to confirm the proper amount of surfactant capable of suppressing protein aggregation while saturating the NaCl concentration of the electrolyte layer.

Three kinds of analytical devices were prepared in which the amount of the nonionic surfactant Tween20 was 0.012 mg, 0.058 mg, and 0.115 g, and the potential of the reference electrode was measured. In this experiment, in order to focus only on the performance of the reference electrode, a commercially available reference electrode was placed instead of the working electrode on the side where the working electrode was originally formed in the analytical device, and the commercially available electrode and the reference electrode were connected by a specimen, and the potential difference between the two electrodes was measured.

Results for 0.012 mg are shown in Fig. 7, results for 0.058 mg are shown in Fig. 8, and results for 0.115 mg are shown in Fig. 9. It can be seen that the potential difference $\Delta$0.9 mV after 200 seconds in the conventional configuration is improved in the amounts of 0.012 mg and 0.058 mg. On the other hand, the potential is unstable at 0.115 mg. It is considered that this is because the permeation of the specimen became too fast due to the application of a large amount of surfactant, and it reached the Ag/AgCl electrode without reaching the saturated Cl- concentration in the electrolyte layer. The above results suggest that Tween20 should be arranged without excess or deficiency.

Further, as shown in Fig. 5, the working electrode 6, which is an ion-selective electrode, was arranged on one side, and the specimen was dispensed in a state where both electrodes were arranged, and the potential difference between the working electrode and the reference electrode was measured. The results are shown in Fig. 10. As a comparative example, the results of the configuration without the surfactant layer are shown in Fig. 11. In the configuration of Example 1 shown in Fig. 10, the measured potential was stable from about 60 seconds after dispensing, while in the configuration of the comparative example shown in Fig. 11, the potential was unstable.

As the working electrode (ion selective electrode), a solid contact type ion selective electrode in which an ion selective membrane 6a having selectivity for the target ion was laminated on the base electrode 6b was used. In this embodiment, an ion selective electrode was used with K+ as a target ion.

For the base electrode of the working electrode, efforts using Ag/AgCl, carbon, and PEDOT (poly(3,4-ethylenedioxyphene))/PSS (poly (4-styrenesulfonate)) have been proposed. And the base electrode can be used in the present invention without any limitation. The base electrode may be selected according to the necessary characteristics of the device such as cost and performance, and the Ag/AgCl electrode is used as the base electrode in this embodiment.

The ion selective membrane can be any commonly used membrane that is sensitive to the target ion and sufficiently selective to the interfering ion. Materials used for the ion selective membrane include valinomycin as an example of an ionophore, potassium tetraphenylborate (KTPB) as an example of an anion removing agent, NPOE (o-nitrophenyloctyl ether) and DOS (di (2-ethylhexyl) sebacate) as examples of plasticizers, and PVC (polyvinyl chloride) alone or a copolymer of polyvinyl chloride and polyvinyl acetate as examples of polymeric agents.

Then, an appropriate amount of each component is mixed and dissolved or dispersed in THF (tetrahydrofuran) or cyclohexanone as a solvent. The resulting solution is applied onto a base electrode (Ag/AgCl electrode) with a layer of intermediate layers such as NaCl, etc., by an inkjet method to produce an ion selective membrane. Further, the coating method is not limited to the inkjet method, and the ion selective membrane can be laminated on the base electrode after adjusting the viscosity of the solution according to each printing method such as a dispenser or screen printing.

The present invention is not limited to an analytical device that uses a single Ag/AgCl electrode as a reference electrode. As shown in Non-Patent Literature 1, Ag/AgCl may be used as the base electrode of the reference electrode, which may have a support electrolyte layer on its surface to stabilize the interface potential with the specimen and to reduce the influence of interfering ions. For example, as shown in Non-Patent Literature 1, TBA-TBB (tetrabutylammonium tetrabutylborate) or TDMACl (tridodecylmethylammonium chloride), plasticizer, and PVC are mixed in appropriate amounts. The solution prepared by mixing these with THF or cyclohexanone as solvents is applied and dried to form the support electrolyte layer. In the present invention, a laminate layer may be provided on the front and back surfaces of the reference electrode in order to prevent outflow or contamination of the electrolyte layer and the component A layer when the analytical device is handled.

As described above, according to the present invention, by arranging the component A in the porous channel, the specimen and the component A can be effectively mixed, so that salting out of the electrolyte arranged in the vicinity of the reference electrode can be suppressed, and the effect of testing with a small amount of the specimen can be obtained.

(Example 2)

In this example, L-(+)-arginine hydrochloride (chemical formula: $C_6H_{14}N_4O_2 \cdot HCl$) was used as the component A layer. Since L-(+)-arginine hydrochloride is not a surfactant, it does not form micelles with proteins or the like in the specimen, but it has a solubilizing effect by hydrophobic interaction with specific hydrophobic residues (aromatic amino acid residues or the like) of proteins in the specimen. Therefore, it is possible to suppress the aggregation of proteins when the specimen permeates the electrolyte layer.

In addition, when a surfactant is used in the component A layer, depending on the combination of the surfactant and the material of the ion selective membrane, the surfactant may destroy the membrane structure of the ion selective membrane and affect the measured potential. Therefore, it was necessary to pay attention to factors (e.g., the distance between the reference electrode and the working electrode, the measurement time, etc.) that could cause a situation where the surfactant diffuses and comes into contact with the ion selective membrane. On the other hand, in the case of L-(+)-arginine hydrochloride, the effect of solubilization by hydrophobic interaction with a specific hydrophobic residue (aromatic amino acid residue, etc.) has a small effect on the ion selective membrane and has the effect of increasing the degree of freedom in selecting membrane materials.

Two kinds of analytical devices were prepared with 0.13 mg and 0.65 mg of the L-(+)-arginine hydrochloride, and the potential of the reference electrode was measured. In this experiment, in order to focus only on the performance of the reference electrode, a commercially available reference electrode was placed instead of the working electrode on the side where the working electrode was originally formed in the analytical device, and the commercially available electrode and the reference electrode were connected by a specimen, and the potential difference between the two electrodes was measured.

Results for 0.13 mg are shown in Fig. 12 and for 0.65 mg in Fig. 13. It can be seen that the time stability of the potential is improved by an amount of 0.13 mg, whereas the conventional configuration has a potential difference of $\Delta 0.9$ mV after 200 seconds. For 0.65 mg, the potential difference is slightly larger, $\Delta 1.2$ mV. Therefore, the amount of L-(+)-arginine hydrochloride is preferably about 0.13 mg in order to perform the measurement with a higher accuracy. Therefore, it was confirmed in this experiment that the time stability of the potential was improved by optimizing the amount of L-(+)-arginine hydrochloride arranged as the component A layer, and the potential could be measured in a short time.

The present invention is not limited to the embodiments described above, and various changes and modifications may be made without departing from the spirit and scope of the present invention. Accordingly, the following claims are appended hereto in order to make the scope of the present invention public.

The present application claims priority based on Japanese Patent Application No. 2023-097172 filed on June 13, 2023, and Japanese Patent Application No. 2024-067014 filed on April 17, 2024, which are hereby incorporated by reference herein in their entirety.

[Reference Signs List]

1 channel
2 channel wall
3 reference electrode
4 electrolyte layer
5 component A
6 working electrode
6a ion selective membrane
6b base electrode of working electrode
7 support electrolyte membrane
8 dispensing section
9 first channel chamber
10 second channel chamber
11 third channel chamber
12 fourth channel chamber

**Claims**

1. An analytical device having a channel region enclosed by a channel wall provided in an inside of a porous substrate,

   wherein the channel region comprises a first channel chamber, a second channel chamber, and a channel connecting the first channel chamber and the second channel chamber,
   wherein a reference electrode is provided in the first channel chamber, and
   a working electrode is provided in the second channel chamber,
   wherein an electrolyte is arranged upstream of the first channel chamber or on the surface of the reference electrode based on the advancing direction of a specimen in the channel region, and
   a component A is arranged upstream of a position where the electrolyte is arranged,
   wherein the component A is a component exerting an effect to change a conformation of a protein in a specimen.

2. The analytical device according to claim 1, wherein the component A and the electrolyte comprise an adjacent or a mixed region.

3. The analytical device according to claim 1, wherein the component A is a component exerting an effect of forming a micelle with a protein.

4. The analytical device according to claim 3, wherein the component A is a surfactant.

5. The analytical device according to claim 4 wherein the component A is a nonionic surfactant.

6. The analytical device according to claim 5 wherein the component A is Tween20.

7. The analytical device according to claim 1, wherein the component A is a watersoluble polymer.

8. The analytical device according to claim 1, wherein the component A is a salt.

9. The analytical device according to claim 8 wherein the component A is a chaotropic salt.

10. The analytical device according to claim 8 wherein the component A is L-(+)-arginine hydrochloride.

11. The analytical device according to claim 1, wherein the component A is an acid.

12. The analytical device according to claim 1, wherein the component A is an organic solvent.

13. The analytical device according to any one of claims 1 to 12, wherein the base electrode of the reference electrode is an Ag/AgCl electrode.

14. The analytical device according to any one of claims 1 to 13, wherein the reference electrode comprises a laminate layer on a surface of the reference electrode.

15. The analytical device according to any one of claims 1 to 14, wherein the reference electrode is a reference electrode in which a support electrolyte membrane is laminated on a base electrode.

16. The analytical device according to any one of claims 1 to 15, wherein the working electrode is an ion selective electrode in which an ion selective membrane is laminated on a base electrode of the working electrode.

## FIG. 1A

## FIG. 1B

# FIG. 2A

# FIG. 2B

# FIG. 3

# FIG. 4

# FIG. 5

# FIG. 6

# FIG. 7

# FIG. 8

# FIG. 9

# FIG. 10

# FIG. 11

FIG. 12

# FIG. 13

# INTERNATIONAL SEARCH REPORT

| International application No. |
|---|
| **PCT/JP2024/021045** |

**A.    CLASSIFICATION OF SUBJECT MATTER**

*G01N 27/28*(2006.01)i; *G01N 27/30*(2006.01)i; *G01N 27/333*(2006.01)i; *G01N 27/416*(2006.01)i
FI:    G01N27/28 321F; G01N27/416 351K; G01N27/416 351B; G01N27/28 321A; G01N27/30 311Z; G01N27/333;
           G01N27/333 331C; G01N27/416 351; G01N27/416 346

According to International Patent Classification (IPC) or to both national classification and IPC

**B.    FIELDS SEARCHED**

Minimum documentation searched (classification system followed by classification symbols)

G01N27/26-27/49

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2023-048923 A (CANON KABUSHIKI KAISHA) 07 April 2023 (2023-04-07) entire text, all drawings | 1-16 |
| A | JP 2023-048924 A (CANON KABUSHIKI KAISHA) 07 April 2023 (2023-04-07) entire text, all drawings | 1-16 |
| A | JP 2023-048922 A (CANON KABUSHIKI KAISHA) 07 April 2023 (2023-04-07) entire text, all drawings | 1-16 |
| A | US 2016/0033438 A1 (PRESIDENT AND FELLOWS OF HARVARD COLLEGE) 04 February 2016 (2016-02-04) entire text, all drawings | 1-16 |
| A | JP 11-194109 A (TAIYO YUDEN CO., LTD.) 21 July 1999 (1999-07-21) entire text, all drawings | 1-16 |

☑ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **15 August 2024** | **27 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/021045** |

**C.    DOCUMENTS CONSIDERED TO BE RELEVANT**

| Category* | Citation of document, with indication, where appropriate, of the relevant passages | Relevant to claim No. |
| --- | --- | --- |
| P, A | JP 2023-156182 A (CANON KABUSHIKI KAISHA) 24 October 2023 (2023-10-24) entire text, all drawings | 1-16 |

Form PCT/ISA/210 (second sheet) (July 2022)

**INTERNATIONAL SEARCH REPORT**
Information on patent family members

International application No.

**PCT/JP2024/021045**

| Patent document cited in search report | | | Publication date (day/month/year) | Patent family member(s) | | | Publication date (day/month/year) |
|---|---|---|---|---|---|---|---|
| JP | 2023-048923 | A | 07 April 2023 | (Family: none) | | | |
| JP | 2023-048924 | A | 07 April 2023 | CN | 118043657 | A | |
| | | | | entire text, all drawings | | | |
| JP | 2023-048922 | A | 07 April 2023 | CN | 118019973 | A | |
| | | | | entire text, all drawings | | | |
| US | 2016/0033438 | A1 | 04 February 2016 | WO | 2014/149611 | A1 | |
| | | | | entire text, all drawings | | | |
| JP | 11-194109 | A | 21 July 1999 | (Family: none) | | | |
| JP | 2023-156182 | A | 24 October 2023 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11194109 A
- JP 2021037612 A
- JP 2023097172 A
- JP 2024067014 A

**Non-patent literature cited in the description**

- **NIPAPAN RUECHA** ; **ORAWON CHAILAPAKUL** ; **KOJI SUZUKI** ; **DANIEL CITTERIO**. Fully Inkjet-Printed Paper-Based Potentiometric Ion-Sensing Devices. *Analytical chemistry*, 29 August 2017, vol. 89, 10608-10616